# EUROPEAN PATENT SPECIFICATION

(11) **EP 1 632 932 B1**
(45) Date of publication and mention of the grant of the patent: **19.12.2007**
(21) Application number: 04745404.6
(22) Date of filing: 28.05.2004
(51) Int. Cl.: G10L 13/02, G10L 13/06, G10L 15/22

(54) **VOICE RESPONSE SYSTEM, VOICE RESPONSE METHOD, VOICE SERVER, VOICE FILE PROCESSING METHOD, PROGRAM AND RECORDING MEDIUM**
SPRACH-ANTWORTSYSTEM, SPRACH-ANTWORTVERFAHREN, SPRACH-SERVER, SPRACH-DATEI-VERARBEITUNGSVERFAHREN, PROGRAMM UND AUFZEICHNUNGSMEDIUM
SYSTEME DE REPONSE VOCALE, PROCEDE DE REPONSE VOCALE, SERVEUR VOCAL, PROCEDE DE TRAITEMENT DE FICHIER VOCAL, PROGRAMME ET SUPPORT D'ENREGISTREMENT

(30) Priority: 02.06.2003 JP 2003156714
(43) Date of publication of application: 08.03.2006
(73) Proprietor: International Business Machines Corporation, Armonk, NY 10504 (US)
(72) Inventor: Tahara, Yoshinori, c/o Yamato site, IBM Japan Ltd., Yamato-shi, Kanagawa 242-8502 (JP); Murayama, Tomoko, c/o Yamato site, IBM Japan Ltd., Yamato-shi, Kanagawa 242-8502 (JP); Baba, Masahiro, c/o Yamato site, IBM Japan Ltd., Yamato-shi, Kanagawa 242-8502 (JP)
(74) Representative: Williams, Julian David
(86) International application number: PCT/JP2004/007368
(87) International publication number: WO 2004/109658

(56) References cited:
- WO-A-98/44484
- JP-A- 11 095 793
- JP-A- 2001 265 376
- JP-A- 2002 221 980
- US-B1- 6 334 103
- ADACHI, F. ET AL.: 'VoiceXML no Doteki Seisei ni Motozuku Shizen Gengo Onsei Taiwa System' INFORMATION PROCESSING SOCIETY OF JAPAN KENKYU HOKOKU vol. 2002, no. 10, 01 February 2002, pages 133 - 138, XP002983536
- MURAKAMI, T. ET AL.: 'Onsei Ninshiki o Riyo shita Rokuon Onsei File Renketsu no Jidoka' INFORMATION PROCESSING SOCIETY OF JAPAN ZENKOKU TAIKAI KOEN RONBUNSHU vol. 66, no. 2, 09 March 2004, pages 2.41 - 2.42, XP002983537

## Description

The present invention relates to an automatic voice response system and, more particularly, to a system which makes a response through an automatically synthesized voice by using voice recognition.

When a voice application automatically outputs a system message, it uses a voice file recorded in advance. For example, in the case of VoiceXML in which a standard speech interface is defined, such message output is performed by designating a voice file name by means of an <audio> tag. For example, a VoIP-based voice system using VoiceXML is disclosed in the following patent document 1.

Patent Document 1: Japanese Published Patent Application No. 2002-57724

However, there is a problem that if a variable is included in the message, the load on the application is considerably large. To be more specific, in a case where a VoiceXML application inserts a variable in a voice file on a conventional voice server, the operation and implementation of the application are, for example, such that a servlet is developed which has the functions of preparing a voice file in which a sentence is divided at the position of a variable, and determining a name for the voice file from the variable to dynamically generate a VXML document for reproducing the voice file, voice files before and after a variable in a VXML document are designated by two <audio> tags, and the servlet is called as sub- voice information by suitable timing.

In the case of reproducing a message through a voice file in this way, there is a problem that the load on the application is considerable in the following points. First, there is a problem with implementation of the application. That is, it is necessary for the application to originally develop logic for identifying and reproducing a voice file for a variable segment at the time of execution. In other words, there is a program that there is a need to develop a large amount of complicated applications. There is also a problem that there is a need to change the application according to change of sentences.

Further, there are problems in terms of time required for an operation for preparing a recording file and quality and management of the recording file. According to the conventional method, it is necessary for a voice file to be recorded by being divided into a segment before a variable, a variable segment and a segment after the variable. For example, in the case of a sentence "your order is rice, isn't it" including an article name as a variable segment, there is a need to prepare voice files "your order is", "rice" and " isn't it ". In such a case, it is necessary for a recording person to utter unnaturally divided parts of a sentence, the utterance is liable to be unnatural, and the result of reproduction of the utterance is defective in terms of naturalness and smoothness.

There is also a method of consecutively recording the whole sentence and dividing the sentence by a voice file editor. In this case, however, it is necessary for a person editing the voice file to accurately grasp the design of an application. Further, the possibility of error in editing is high since complicated operations including division of a voice file are required. There is also a problem that the workload is increased due to the need for many operations including voice file editing operations. Also, the number of voice files is increased since voice files formed by dividing a sentence at a variable's position in advance are prepared. Further, it is necessary to cut off and edit silent portions at the beginning and end of each of voice files by using the voice file editor in order to smoothly concatenate the voice files. Such editing operations are increased in proportion to the number of voice files. As the number of voice files is increased, the workload becomes tremendously large and complicated operations are increased. There is also a possibility of file naming and file management being made complicated by an increased number of voice files.

Document US 6 334 103 discloses a voice user interface wherein the selected prompt can include previous speech recognition results that would substitute for actual parameters in a speech synthesis script. The prompts would be synthesised as a concatenation of recorded prompts and synthetic utterances.

To solve the above-described problems, there are provided a voice response system, a voice response method, a voice server, a voice file processing method and programs as defined in the appended claims.

Preferred embodiments of the present invention will now be described, by way of example only, with reference to the accompanying drawings, in which:
Figure 1 is a diagram schematically showing a hardware configuration of a computer suitably implemented as an embodiment of the present invention.
Figure 2 is a block diagram showing the present invention by using functional blocks.
Figure 3 is a diagram showing the logic of generation of a grammar in voice file processing section 231.
Figure 4 is a diagram showing details of the grammar generation logic.
Figure 5 is a diagram showing the logic of division of a voice file by voice recognition in voice recognition engine 232.
Figure 6 is a diagram showing the result of division of the voice file by voice recognition in voice recognition engine 232.
Figure 7 is a flowchart showing an example of the flow of processing in voice server 230 of the present invention.

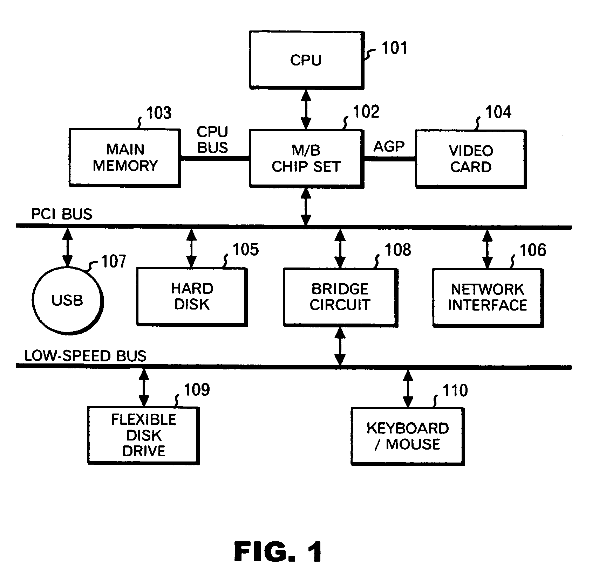

Figure 1 is a diagram schematically showing a hardware configuration of a computer suitable to implement the present invention.

Figure 1 illustrates a hardware configuration of a computer implemented as the embodiment. The computer has a CPU (central processing unit) 101, which is a computation means, a main memory 103 connected to the CPU 101 through an M/B (mother board) chip set 102 and a CPU bus, a video card 104 also connected to the CPU 101 through the M/B chip set 102 and an AGP (Accelerated Graphics Port), a hard disk 105 connected to the M/B chip set 102 through a PCI (Peripheral Component Interconnect) bus, a network interface 106 also connected to the M/B chip set 102 through the PCI bus, a USB port 107 also connected to the M/B chip set 102 through the PCI bus, a flexible disk drive 109 connected to the M/B chip set 102 from the PCI bus through a bridge circuit 108 and a low-speed bus such as an ISA (Industry Standard Architecture) bus, and a keyboard/mouse 110 also connected to the M/B chip set 102 through the bridge circuit 108 and the low-speed bus.

Figure 1 illustrates only an example of a hardware configuration of a typical computer implemented as the embodiment, and any other configuration may be adopted if this embodiment is applicable. For example, a configuration may be adopted such that only a video memory is incorporated instead of the video card 104 and image data is processed by the CPU 101. A CD-ROM (Compact Disc Read Only Memory) or DVD-ROM (Digital Versatile Disc Read Only Memory) drive connected through an interface such as ATA (AT Attachment) may be provided. Also, a speaker or the like for voice reproduction may be provided.

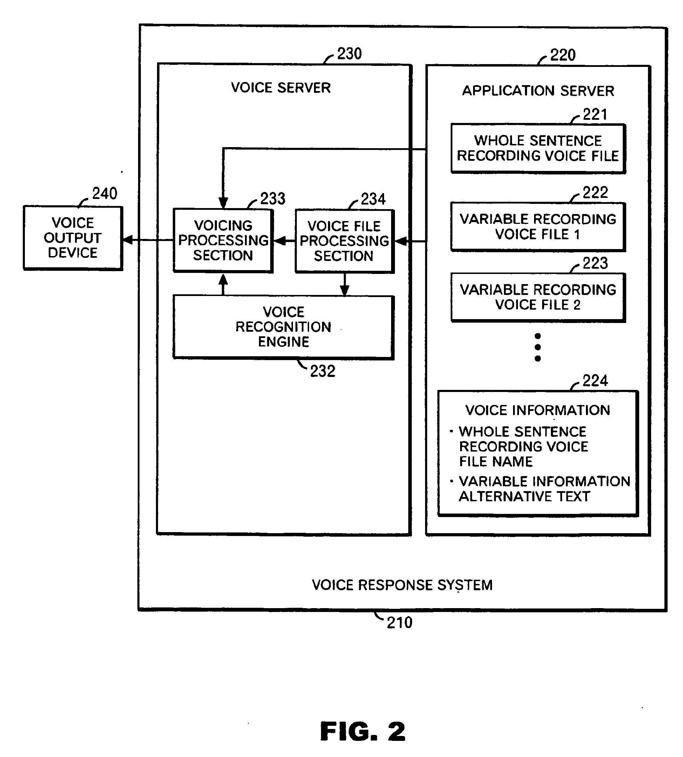

Figure 2 is a block diagram showing the present invention by using functional blocks. A voice response system 210 is constituted by a voice server 220 and an application server 230. The voice server 220 and the application server 230 may be implemented as one computer such as that shown in Figure 1 or as a combination of two or more computers or a combination of a computer and storage.

The application server 220 contains a whole sentence recording voice file 221, variable recording voice files 222, 223 and voice information 224. These can be grasped as an application program executed on the application server or as parts of the application program. The whole sentence recording voice file 221 is the whole of a sentence which includes a variable segment, i.e., a segment showing an entry of a variable, and which is recorded as one file. A particular word is substituted for the variable segment in the whole sentence recording voice file 221 to be recorded. As this word, a word designated in advance in the voice server is used. For example, a word "article name" is used for the variable segment and a sentence "Your order is article name, isn t it?" is prepared in voice form and stored as a whole sentence recording voice file.

Further, voices to be entered in the variable segment are stored as variable recording voice files 1, 2 ... (222, 223) in the application server 220. For example, files of "rice" and "miso" prepared in voice form are stored. A plurality of variable segments may be used. In such a case, variable recording voice files corresponding to the variable segments are stored. For example, variable segments 1 and 2 are set as "article name" and "number of articles" and a sentence "Your order is article name and quantity is a number of articles, isn t it?" prepared in voice form is stored as a whole sentence voice file. Also, variable recording voice files corresponding to "article name" and "number of articles" (such as "rice" and "miso" for the former and "one" and "two" for the latter) are stored.

Further, voice information 224 is stored in the application server 220. The voice information 224 includes a file name for the whole sentence recording voice file, variable information and an alternative text. The variable information contains at least information indicating the existence/nonexistence of a variable segment, i.e., information indicating need/no need for processing on a variable. The alternative text is the whole of a text sentence including the variable segment. In the case of the above-described example, the alternative text is "Your order is <variable segment>, isn t it?". If a plurality of whole sentence recording voice files exist, voice information may be prepared for each whole sentence recording voice file.

The voice server 230 has a voice file processing section 231, a voice recognition engine 232, and a voicing processing section 233. The voice file processing section 231 extracts from the application server 220 the voice information 224 and the whole sentence recording voice file 221 designated by the voice information, determines whether or not there is a need for processing on a variable from the variable information contained in the voice information, and dynamically generates a grammar from the alternative text if there is a need for processing on a variable.

The voice recognition engine 232 receives the whole sentence recording voice file and the dynamically generated grammar from the voice file processing section 234. The voice recognition engine 232 divides the whole sentence recording voice file recognized on the basis of them into a variable voice file corresponding to the variable segment and a part voice file which is a segment other than the variable. Not necessarily only one variable voice file and only one part voice file are obtained. A plurality of variable voice files and a plurality of part voice files may exist.

The voicing processing section 233 receives the part voice file and the variable voice file from the voice recognition engine 232. The voicing processing section 233 obtains from the application server 220 the variable recording voice file designated as the replacing file corresponding to the variable voice file. This operation may be performed in the voice file processing section and handed over to the voicing processing section. The part voice file and the variable recording voice file are concatenated and made into voice in order in correspondence with the alternative text to be reproduced.

A voice output device 240 is connected to the voice response system 210 to reproduce and output voice on the basis of the reproduced voice file. This voice output device may be, for example, a speaker unit for a computer such as shown in Figure 1, i.e., the same system as the voice response system, or a telephone terminal or the like connected through a public telephone circuit or the like.

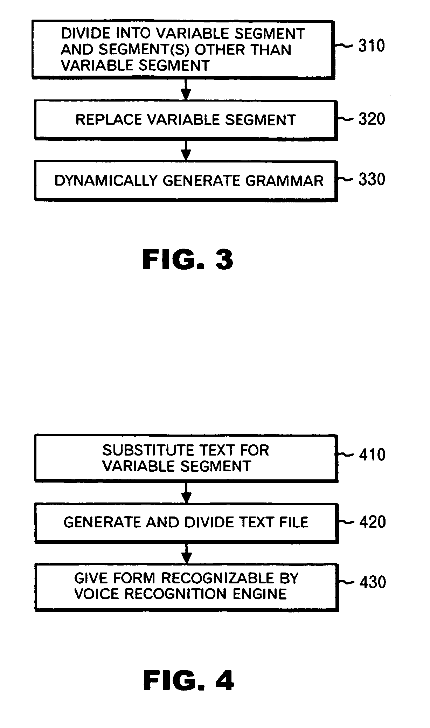

Figure 3 shows the logic of generation of a grammar in the voice file processing section 231. First, the whole of the alternative text sentence is divided into the variable segment and the segment(s) other than the variable segment (310). Next, a predetermined word is substituted for the variable segment (320). This word is determined in advance by the voice server. In the whole sentence recording voice file, this word prepared in voice form by using a predetermined word is recorded as the variable segment. A grammar is dynamically generated on the basis of the text having the substituted word (330).

An example of generation of a grammar will further be described in detail with reference to Figure 4. A predetermined word is first substituted for the variable segment of the alternative text (410). A text file is generated on the basis of the alternative text. At this time, there is a need to perform word division such that the voice recognition engine can recognize the text file (420). As this word division, processing including, for example, punctuation and division into words by a maximum length matching method with reference to words registered in a dictionary for the voice recognition engine. To deliver the division result to the voice recognition engine, the division result is changed into such a form as to be recognizable by the voice recognition engine (430). The grammar thus generated is delivered to the voice recognition engine to be registered.

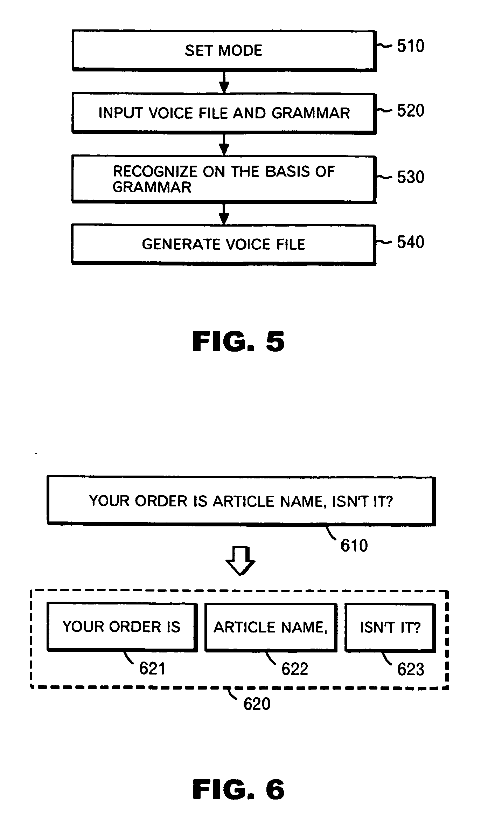

Figure 5 shows the logic of division of a voice file by voice recognition in the voice recognition engine 232. The voice recognition engine is first set in a mode for forming a file from a recognized voice (510). Next, a whole sentence recording voice file containing a variable and a generated grammar are input to the voice recognition engine 232 (520). The voice recognition engine 232 recognizes the whole sentence recording voice file on the basis of the grammar (530). The voice recognition engine 232 divides the recognized whole sentence recording voice file into a variable voice file corresponding to the variable segment and a part voice file (part voice files) other than the variable, thus generating voice files (540).

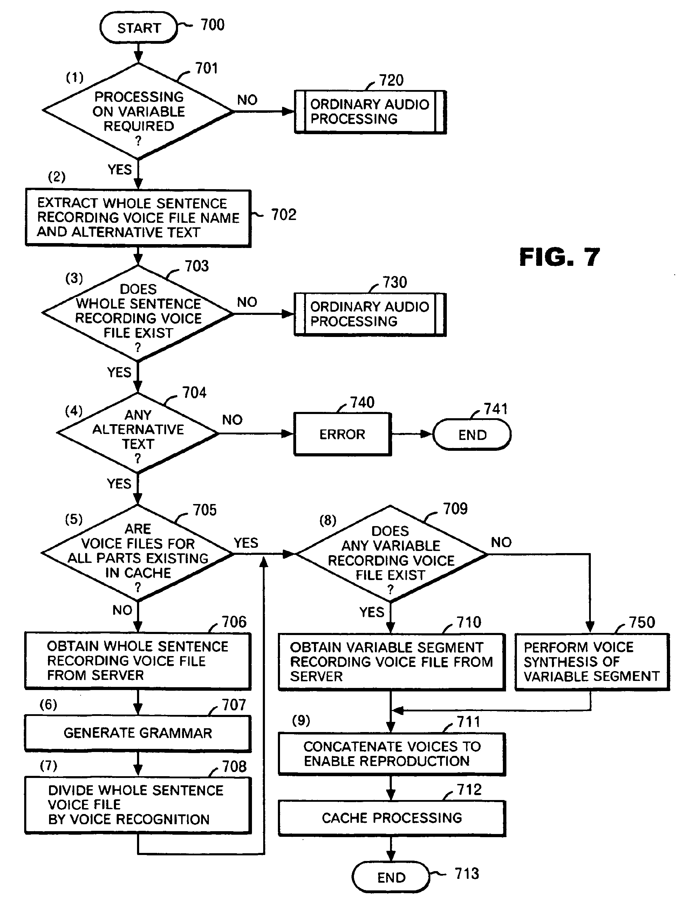

Figure 6 shows the result of division of a voice file based on voice recognition in the voice recognition engine 232. In this example, it is assumed that a variable segment is "article name". A whole sentence recording voice file 610 is divided into a variable voice file 622 corresponding to a variable segment and part voice files 621 and 622 other than the variable as a result (620) of voice recognition and division.

Figure 7 is a flowchart in which an example of the flow of processing in the voice server 230 of the present invention is described. First, determination is made as to whether or not there is a need for processing on a variable according to the existence/nonexistence of information showing identification of the variable contained in variable information in voice information 224 obtained from the application server 220 (701). If it is determined that there is no need for processing on a variable, ordinary audio processing is performed (720). The ordinary audio processing is, for example, such that if a voice file to be reproduced in correspondence with a file name in the voice information exists in the application server, it is reproduced. If an alternative text exists in the voice information in a case where no voice file to be reproduced exists, the alternative text is reproduced. If there is no alternative text, error processing is performed or the process ends in an error if no error processing exists.

If it is determined in step 701 that there is a need for processing on a variable, a whole sentence recording voice file name and a corresponding alternative text are extracted from voice information 224 (702). A check is then made as to whether or not any whole sentence recording voice file exists in the application server 220 (703). If no whole sentence recording voice file exists in the application server 220, the information showing identification of the variable is deleted and ordinary audio processing such as that described above is thereafter performed (730).

If a whole sentence recording voice file exists in the application server 220, a check is further made as to whether or not an alternative text exists (704). If no alternative text exists, an error results and the process ends (740, 741). If an alternative text exists, determination is made as to whether the whole sentence recording voice file has already existed on a cache (not shown) on the voice server 230 (705). If the whole sentence recording voice file has already existed on the cache, the process moves to step 709. If not existed on the cash, the whole sentence recording voice file is obtained from the application server 220 (706). A grammar is dynamically generated by using the alternative text and the while sentence recording voice file (707). Subsequently, voice recognition is performed to divide the whole sentence recording voice file (708).

A check is then made as to whether or not a variable recording voice file exists in the application server 220 (709). If a variable recording voice file exists in the application server 220, it is obtained from the application server 220 (710). These voice files are successively concatenated to be reproduced in voice form (711). The generated voice file is held on the cache for a necessary time period (712) so that it can be immediately used when necessary. If no variable recording voice file exists in step 709, a voice file is generated by voice synthesis using the alternative text corresponding to the variable (750). This sequence of process steps is realized as a computer program. This computer program may be provided by being stored on a computer-readable storage medium such as a CD-ROM or a flexible disk.

An example of VXML browser implementation of the processing of the present invention shown in Figure 7 will be described. Sections (1) to (9) correspond to the contents of Figure 7. "VXML browser" is a means for providing the functions corresponding to the voice file processing section 231 and the voicing processing section 233 of the present invention for the purpose of processing on VXML.
(1) '#' symbol of an audio tag referred to as a mark for request for processing on a variable is checked. If no corresponding symbol exists, ordinary audio processing is performed.
(2) A whole sentence recording voice file name and an alternative text corresponding to the whole sentence recording voice file are extracted from the audio tag.
(3) If no whole sentence recording voice file exists, '#' is taken and ordinary audio processing is performed. Voice synthesis is performed as required.
(4) If there is no alternative text, an error results and the process ends.
(5) If the corresponding processing has already been completed, a cached voice file is used. If only the variable segment has been changed, only a variable recording file is obtained from the application server.
(6) A grammar is formed from the alternative text and the predetermined character sequence for the variable segment.
(7) The grammar and the whole sentence recording voice file are recognized by the voice recognition engine to divide the whole sentence recording voice file.
(8) If there is no variable recording voice file, voice synthesis is performed for the variable segment.
(9) The obtained voice files (and a voice synthesis result in some case) are concatenated to be reproduced.

Tables 1 to 7 shown below represent a pseudo-code expression of the processing of the present invention shown in Figure 7. Sections (1) to (9) correspond to the contents of Figure 7. The following table 1 shows the sequence of process steps.

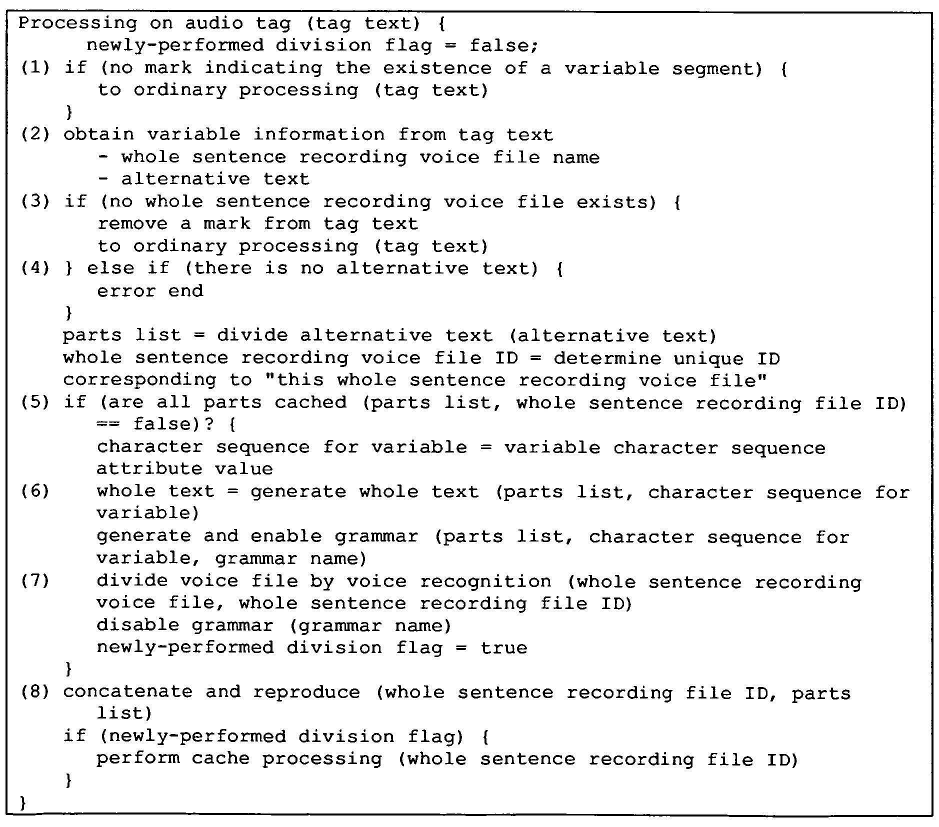

Table 2 relates to processing for dividing the alternative text in (4) in the processing shown in Table 1.

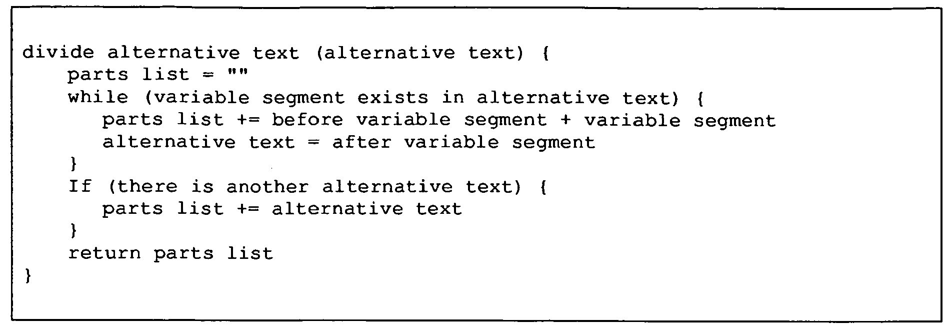

Table 3 shows further details of the processing (5) in the processing shown in Table 1.

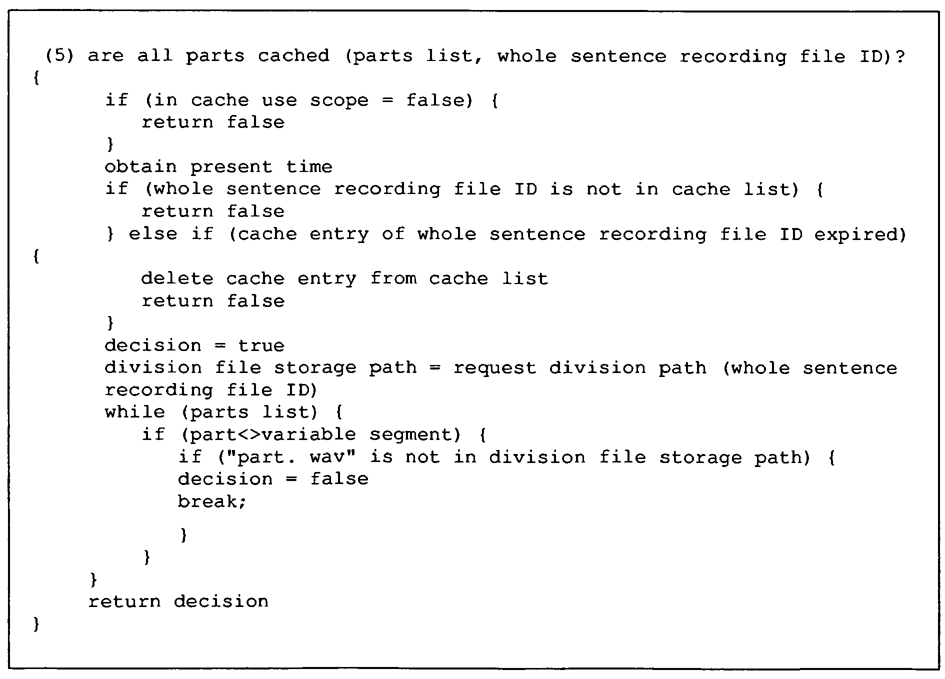

Table 4 shows further details of a portion of the processing (6) in the processing shown in Table 1.

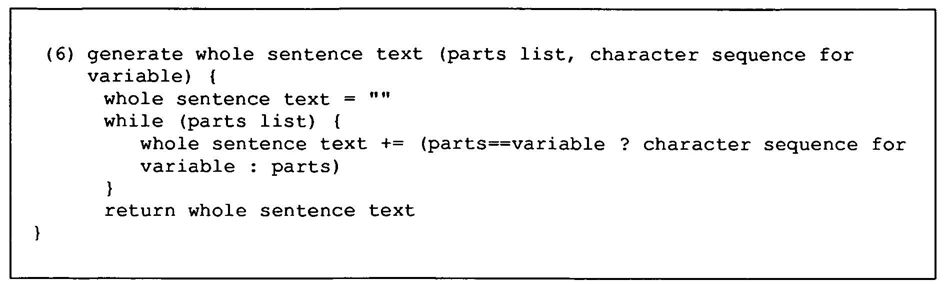

Table 5 shows further details of another portion of the processing (6) in the processing shown in Table 1.

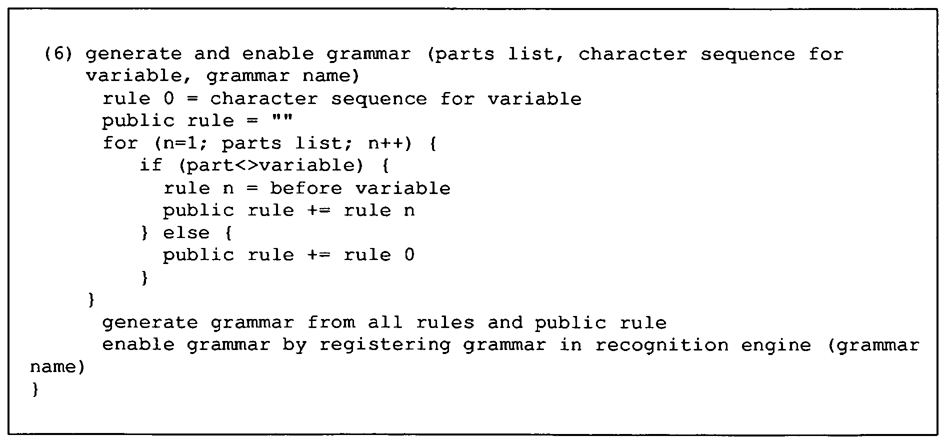

Table 6 shows further details of the processing (7) in the processing shown in Table 1.

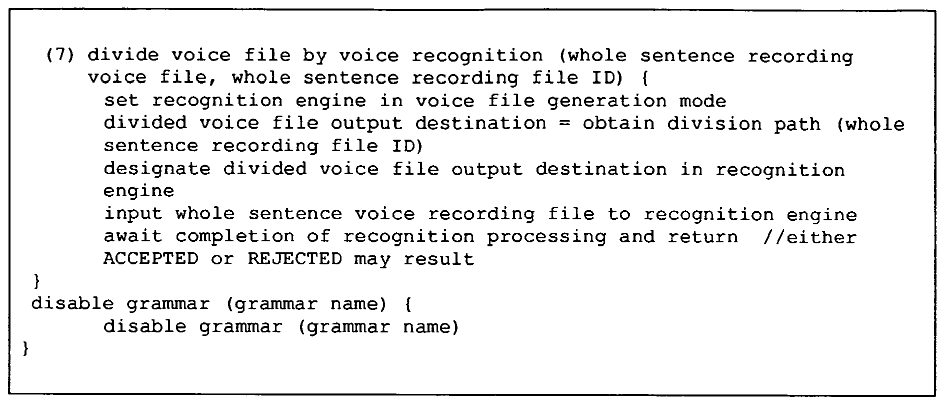

Table 7 shows further details of the processing (8) in the processing shown in Table 1.

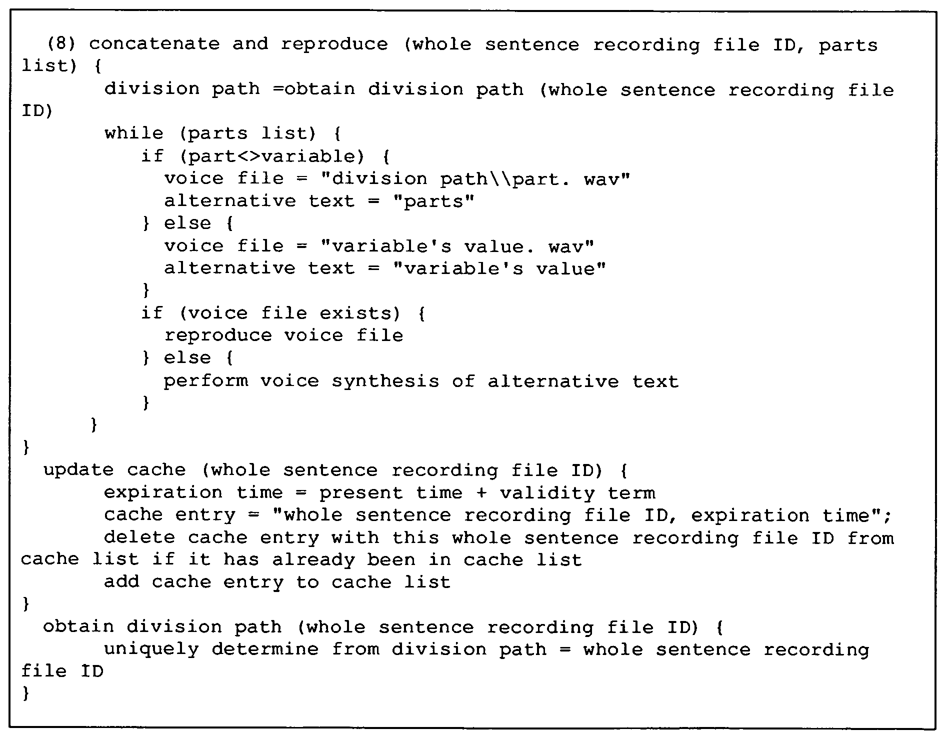

A concrete example of implementation of the present invention in the case of VoiceXML will be described. This expansion can be realized without influencing the existing functions and without violating the VoiceXML specification.

### Voice files prepared in the application server

A whole sentence recording voice file is recorded by preparing the whole of a sentence including a variable as one file. A particular word is substituted for the variable segment to be recorded. This word is a particular one according to an understanding with the voice server. For example, such a word is "variable". A variable recording voice file name is "{content of variable}.wav". If variable character sequences include characters not permitted as a file name in a voice file storage environment, a mapping list file in which variables-versus-voice file names are mapped in CSV form is prepared. A mapped list file name is a fixed name according to an understanding with the voice server. For example, such a mapped list file name is "value-wav.map".

A variable recording voice file and, in some case, a mapped list file are placed in a current path. One or a plurality of variable recording voice files may be classified. A class has a folder specially provided for the class under a current path with the same as the class name. A variable recording voice file which belongs to the class and, in some case, a mapped list file including the description of the file are placed in the folder specially provided for the class.

### Description of voice information in the application server

In correspondence with a whole sentence recording voice file, a mark indicating whether or not the whole sentence recording voice file has a variable is attached to voice information. Further, in correspondence with a whole sentence recording voice file having at least a variable, information on a whole sentence text (alternative text) having at least a variable segment and a name for the variable to be inserted are stored in voice information. Further, a name for a class to which a voice file for a variable belongs is stored, if necessary. In some case, a mapped list file is placed in a current path or a folder specially provided for a class.

A concrete example of establishment of the above-described rules applied to VoiceXML will be described. An application of the present invention to the <audio> tag of VoiceXML is described in the following. Ordinarily, a voice application is operated eventually by using a voice file in which human voice is recorded. During the development of the application, however, voice synthesis is utilized because of the need to develop the application without the voice file. To be adapted to such a use environment, the <audio> tag defined in VoiceXML to reproduce a voice file is specified in such a manner that a voice file name and a character sequence are described; a voice file is reproduced if it exists; and a character sequence is produced by voice synthesis if the voice file is in a non-reproducible condition.

Example of description: "<audio src="wav/sample.wav"> ordered article</audio>"

The present invention is applied in accordance with the essential <audio> tag specifications in terms of function and format.

The src attribute field of the <audio> tag is utilized to indicate whether or not a whole sentence recording voice file has a variable segment. '#' is attached to the top of the whole sentence recording voice file name to indicate the need for processing on a variable. The alternative text portion of the <audio> tag is utilized to add information to a whole sentence recording voice file having a variable segment. The whole text sentence including the variable is described in the alternative text portion. The variable to be inserted is designated by a <value> tag and the <value> tag is inserted at the insertion position. In the case of belonging to a class, the <value> tag is enclosed with a <sayas> tag designating the class name by a class attribute. A mapping list file is placed in a path specially provided for the class or a current path.

Example: Voice files prepared in a case where a message "ordered article is {?}" is reproduced through a voice file
"wav\sample.wav" voice file in which "ordered article is a variable" is recorded as a whole sentence recording voice file
"current path\product\rice.wav" voice file in which "rice" is recorded as a variable recording voice file
Description of VXML document (corresponding to voice information)
<audio src="#wav/sample.wav">
Ordered article is
<sayas class="product">
<value expr="ProductName"/>
</sayas>
</audio>
where # expresses the need for processing on the variable, and "wav/sample.wav" is a whole sentence recording voice file name. Also,
the portion
"ordered article is
<sayas class="product">
<value expr="ProductName"/>
</sayas>" is an alternative text.

These descriptions are made as portions of an application program executed in the application server.

### Functions on the voice server side

Determination is made on the basis of the existence/nonexistence of the mark specified for voice files as to whether or not a whole sentence recording voice file has a variable, and branching to a suitable one of simple reproduction processing and reproduction processing requiring inversion of the variable is selected. Simple voice file reproduction is the same as the conventional operation. Variable insertion processing will be described below, which is run-time processing.

An alternative text corresponding to a whole sentence recording voice file is divided into a variable segment and segments other than the variable segment, and a grammar having parts as a rules is dynamically generated. As a word/phrase for recognizing the variable segment, a rule for recognizing a word/phrase substituted for the variable segment is added to the grammar. For example, such a word/phrase is "variable".

Generation of a grammar will be described in further detail below. A target description is as follows:
<audio src="#confirm.wav">
Your order is <value expr="Product"/>, isn t it?
</audio>
The grammar generation process is as described below.
1. A text for a variable segment is substituted for the variable segment.
   (Before conversion) Your order is <value expr="Product"/>, isn t it?
   (After conversion) Your order is a variable, isn t it?
2. A text file (BNF file) is generated. At this time, there is a need to perform word division to enable recognition by the voice recognition engine. The result in this example is as follows:
   <_rule1>=Your order is a variable isn t it
3. To deliver an acceptable sentence to be uttered to the voice recognition engine, the sentence is provided in a form understandable by the voice recognition engine. More specifically, a BNF file is grammar complied to generate a grammar vocabulary (FSG file). Grammar compilation is processing for changing a grammar into a form understandable by the voice recognition engine. For example, compilation into the FSG format understandable by the voice recognition engine is performed by using a grammar compiler API. The FSG (finite state grammar) file format is a compiled grammar file in a format understandable by the voice recognition engine. The FSG file format is also supported by W3C Speech Interface Framework. The grammar generated as described above is delivered to the voice recognition engine to be registered.

The generated grammar is made enabled by the voice recognition engine. The voice recognition engine is set in a mode for filing a recognized voice. The whole sentence recording voice file including the variable is input to the voice recognition engine. The voice recognition engine recognizes, on the basis of the grammar, the input voice in the state of being divided into the variable segment and the segments other than the variable segment. The voice recognition engine then divides the recognized voice into recognized units to form a voice file.

A variable recording voice file designated from the application program is searched for with a file name "{content of variable}.wav". The search place is a path specially provided for a class if the voice file belongs to the class, or a current path if the voice file does not belong to the class. If the "{content of variable}.wav" file does not exist, a mapping variable-versus-voice file name list is read to obtain a file name, and a search for the file is made. If no voice file for conversion is found due to the nonexistence of a mapping list, a designation with respect to the target variable or a voice file associated with the target variable in the mapping list, or for some other reason, voice synthesis is performed on the basis of the variable text.

The voice file generated by division, the variable recording voice file obtained by a search or variable text voice synthesis of the variable text is reproduced in sequence in accordance with the text sequence. For an improvement in performance, the divided voice files are stored until the application ends. However, suitable file deletion should be executed. It is appropriate to comply with rules provided in advance in the voice server with respect to cache file management. The state of existence of divided voice file fragments is stored to enable utilization of some of the existing divided voice files.

### About determination of variable

A text corresponding to a variable is a value of a variable in the application. The value is determined at the time of execution. Selection as to when and where the variable value is determined depends on the application logic. For example, the desired value can be set as Product="variable value" at any time. Also, a word/phrase recognized at the time of order reception for example may be written to be set as the value.

A sequence of process steps including determination of a variable will be described more concretely below.

There are two types of methods of selection described below as to "when and where the variable value is determined" depending on the application design. (1) A name is given to a recognition target to be used as a variable name, and a word/phrase recognized at the time of utterance from a user is set as a variable value. (2) A variable is declared in advance and a variable value is set at a time selected as desired.

The following table 8 shows an example of processing.

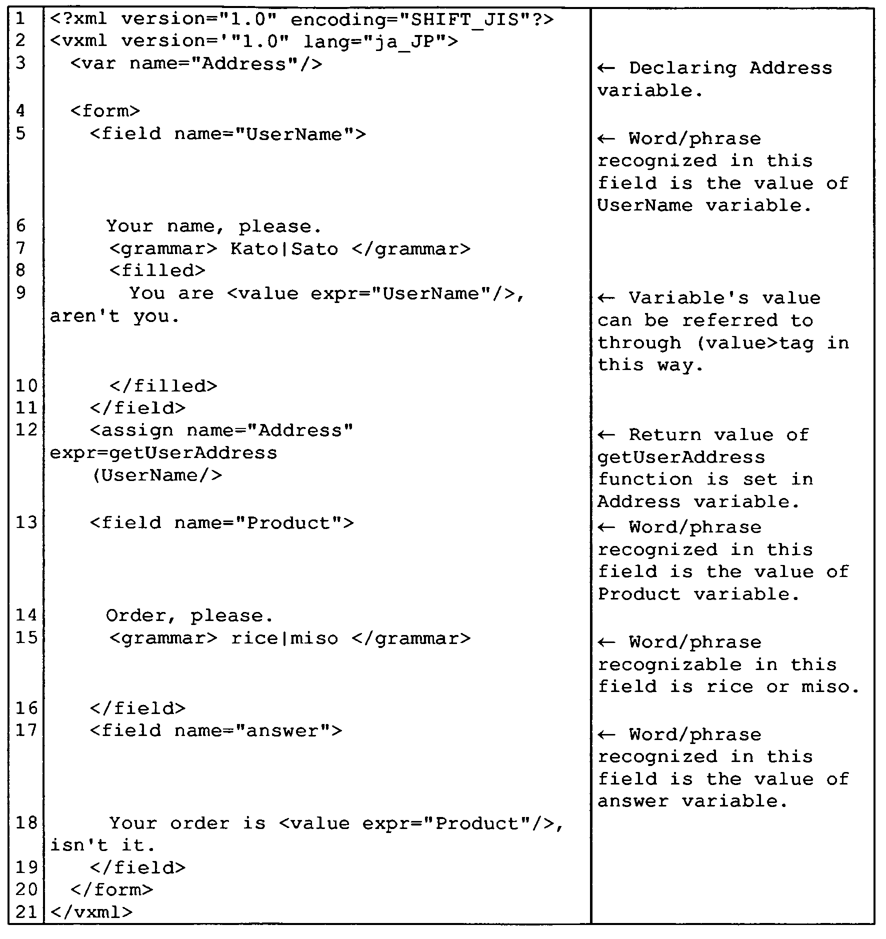

This sample is a VoiceXML application providing a dialogue shown below and written by the conventional functions.
System: Your name, please.
User: Kato : UserName variable value="Kato" when this utterance is recognized.
System: Your are Kato, aren't you?: Thereafter, the return value of Address variable value=getUserAddress function is made, for example, "Shibuya-ku, Tokyo" by <assign> tag.
System: Order, please.
User: Rice : Product variable value="rice" when this utterance is recognized.
System: Your order is rice, isn't it?

An example of type (1) uses a UserName variable, a Product variable and an answer variable. An example of type (2) uses an Address variable. When the variable value is referred to, the <value> tag is used. In the case of use as a parameter to a SCRIPT function, the variable name is directly used.

The UserName variable in type (1) will be described in further detail. The VXML processing section first reads the VXML application in the application server. At the fifth line of the dialogue, the VXML processing section instructs the voice recognition engine to "recognize a word/phrase Kato or Sato" through the grammar. When the voice uttered as "Kato" by the user arrives at the voice recognition engine, the voice recognition engine recognizes the word/phrase "Kato" by collation with the grammar. The voice recognition engine notifies the VXML processing section that it "recognized word/phrase: Kato". The VXML processing section sets the variable value "Kato" in the UserName variable. Each of the VXML processing section and the voice recognition engine is implemented, for example, in the voice server. The VXML processing section can be implemented, for example, as a portion of the voicing processing section.

The Address variable in type (2) will be described in further detail. The VXML processing section receives a notice that the recognition of the UserName field is completed, and starts processing at the twelfth line. The VXML processing section calls up a function to return an address by referring to a client name-versus-address data base called a getUserAddress function, and assigns the return value to the Address variable as the variable value.

### Determination of variable name

In one example of this embodiment, "variable value"+".wav" is provided as variable recording file name. For example, variable segment recording file name="rice.wav" if the Product variable value is "rice" in the case where the variable is the variable "Product". A relating further detailed description will be made with respect to an example shown in the following table 9.

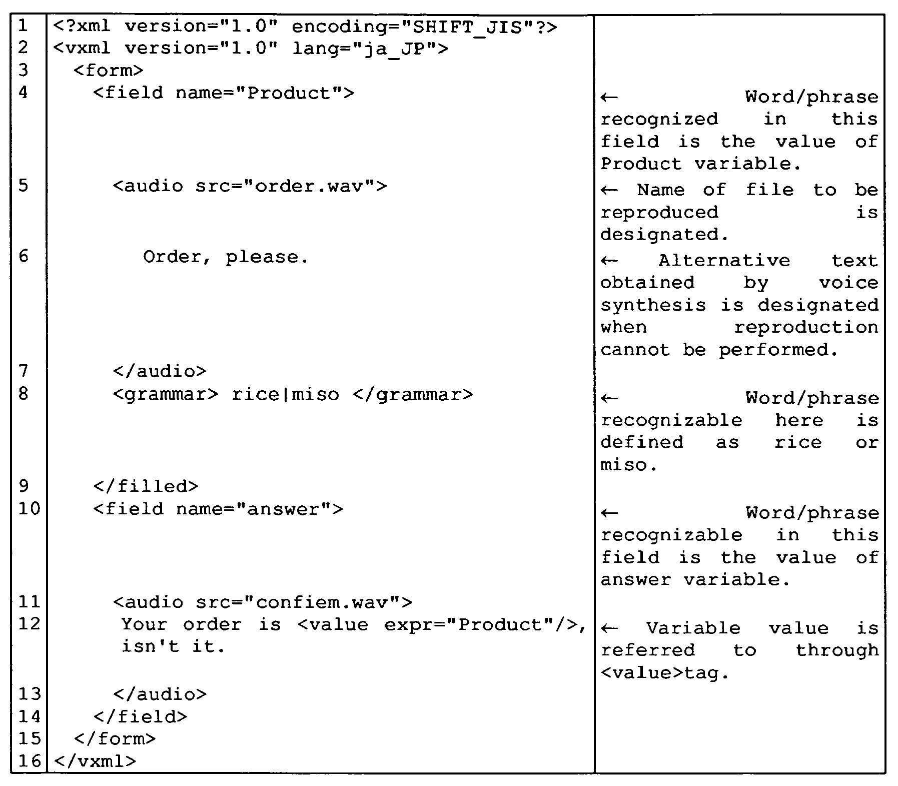

This is a description in a case where in an application an order is asked for and there is a need to say "Your order is OO, isn't it". In this sample, the following dialogue can be held.
System: Order, please.
User: Rice.
System: Your order is rice, isn't it.

For such an application, a variable recording file is prepared in advance with respect to values valid as the variable "Product" at the time of development of the application and is stored in the application server. A file name for the variable recording is "variable value"+".wav". If valid values of the variables are "rice" and "miso", "rice.wav" and "miso.wav" are prepared and stored in the application server. The voice server assembles a variable segment recording file name ("rice.wav") in the <value expr="Product"/> segment from the value of the variable "Product" (e.g., "rice") at the time of execution. If the file exists in the application server, the voice server reproduces it. If the file does not exist in the application server, the voice server performs voice synthesis of the variable value ("rice"). For example, such file name assembly is performed according to (8) "whether or not a variable recording voice file exists" in the flowchart shown in Figure 7.

## Claims

1. A voice response system comprising an application server and a voice server, the application server having a first voice file, second voice file and voice information, the latter including an alternative text, the voice server having:
voice file processing means for receiving the voice information and the first voice file from the application server, and generating a grammar on the basis of the voice information;
voice recognition means for performing voice recognition of the first voice file on the basis of the grammar and dividing the first voice file into a plurality of voice files; and
voice processing means for substituting the second voice file for at least one of the divided voice files.

2. The voice response system according to Claim 1, wherein the first voice file is the whole of a sentence which includes a variable segment indicating an entry of a variable, and which is recorded as one file.

3. The voice response system according to Claim 2, wherein the second voice file is a voice to be entered in the variable segment, the voice being recorded as a file.

4. The voice response system according to Claim 1, wherein the voice information includes a file name for the first voice file, and the voice file processing means extracts the first voice file on the basis of the file name.

5. The voice response system according to Claim 1, wherein the voice information includes an alternative text, and the voice file processing means generates the grammar on the basis of the alternative text.

6. The voice response system according to Claim 1, wherein the voice information includes variable information indicating whether or not there is a need to perform processing on a variable.

7. The voice response system according to Claim 1, further comprising voice output means for outputting voice.

8. A voice response method for a voice response system including an application server and a voice server, the application server having a first voice file, second voice file and voice information, the latter including an alternative text, the voice response method comprising as steps in the voice server:
receiving the voice information and the first voice file from the application server, and generating a grammar on the basis of the voice information;
performing voice recognition of the first voice file on the basis of the grammar and dividing the first voice file into a plurality of voice files; and
substituting the second voice file for at least one of the divided voice files.

9. A program for executing voice response in a voice response system including an application server and a voice server, the application server having a first voice file, second voice file and voice information, the latter including an alternative text, the program being adapted to make the voice server operate:
to receive the voice information and the first voice file from the application server, and generate a grammar on the basis of the voice information;
to perform voice recognition of the first voice file on the basis of the grammar and divide the first voice file into a plurality of voice files; and
to substitute the second voice file for at least one of the divided voice files.

10. A voice server for automatically performing voice processing, comprising:
means for receiving a first voice file, a second voice file and voice information, the latter including an alternative text;
means for generating a grammar on the basis of the voice information;
means for performing voice recognition of the first voice file on the basis of the grammar and dividing the first voice file into a plurality of voice files; and
means for substituting the second voice file for at least one of the divided voice files.

11. The voice server according to Claim 10, wherein the first voice file is the whole of a sentence which includes a variable segment indicating an entry of a variable, and which is recorded as one file, and wherein the second voice file is a voice to be entered in the variable segment, the voice being generated by voice synthesis.

12. The voice server according to Claim 10, wherein the means for generating the grammar generates the grammar by dividing the alternative text into a variable segment and segments other than the variable segment and by substituting a predetermined word for the variable segment.

13. The voice server according to Claim 12, wherein the means for generating the grammar generates the grammar by further dividing the text file generated by substituting the word, and by changing the division result into a voice-recognizable form.

14. A voice file processing method for automatically performing voice file processing by means of a voice server, the method comprising as steps in the voice server:
a step of receiving a first voice file, a second voice file and voice information, the latter including an alternative text,
a step of generating a grammar on the basis of the voice information;
a step of performing voice recognition of the first voice file on the basis of the grammar and dividing the first voice file into a plurality of voice files; and
a step of substituting the second voice file for at least one of the divided voice files.

15. A program for automatically performing voice file processing by means of a voice server, the program making the voice server operate:
to receive a first voice file, a second voice file and voice information, the latter including an alternative text,
to generate a grammar on the basis of the voice information;
to perform voice recognition of the first voice file on the basis of the grammar and divide the first voice file into a plurality of voice files; and
to substitute the second voice file for at least one of the divided voice files.

16. A computer-readable recording medium on which the program according to Claim 9 or claim 15 is stored.

## Patentansprüche

1. Sprachantwortsystem, das einen Anwendungsserver und einen Sprachserver umfasst, wobei der Anwendungsserver eine erste Sprachdatei, eine zweite Sprachdatei und Sprachdaten aufweist, wobei die Letzteren einen alternativen Text enthalten, wobei der Sprachserver Folgendes aufweist:
ein Sprachdateiverarbeitungsmittel zum Empfangen der Sprachdaten und der ersten Sprachdatei vom Anwendungsserver und zum Erzeugen einer Grammatik auf der Grundlage der Sprachdaten;
ein Spracherkennungsmittel zum Ausführen einer Spracherkennung der ersten Sprachdatei auf der Grundlage der Grammatik und zum Teilen der ersten Sprachdatei in eine Vielzahl von Sprachdateien; und
ein Sprachverarbeitungsmittel zum Ersetzen der zweiten Sprachdatei durch mindestens eine der geteilten Sprachdateien.

2. Sprachantwortsystem nach Anspruch 1, wobei die erste Sprachdatei ein ganzer Satz ist, der ein Variablensegment enthält, das einen Eintrag einer Variablen anzeigt und als eine Datei aufgezeichnet wird.

3. Sprachantwortsystem nach Anspruch 2, wobei die zweite Sprachdatei in das Variablensegment einzugebende Sprache ist, wobei die Sprache als eine Datei aufgezeichnet wird.

4. Sprachantwortsystem nach Anspruch 1, wobei die Sprachdaten einen Dateinamen für die erste Sprachdatei enthalten und das Sprachdateiverarbeitungsmittel die erste Sprachdatei auf der Grundlage des Dateinamens entnimmt.

5. Sprachantwortsystem nach Anspruch 1, wobei die Sprachdaten einen alternativen Text enthalten und wobei das Sprachdateiverarbeitungsmittel die Grammatik auf der Grundlage des alternativen Textes erzeugt.

6. Sprachantwortsystem nach Anspruch 1, wobei die Sprachdaten Variablendaten enthalten, die anzeigen, ob eine Notwendigkeit zum Ausführen der Verarbeitung einer Variablen besteht.

7. Sprachantwortsystem nach Anspruch 1, das außerdem ein Sprachausgabemittel zum Ausgeben von Sprache umfasst.

8. Sprachantwortverfahren für ein Sprachantwortsystem, das einen Anwendungsserver und einen Sprachserver beinhaltet, wobei der Anwendungsserver eine erste Sprachdatei, eine zweite Sprachdatei und Sprachdaten aufweist, wobei die Letzteren einen alternativen Text enthalten, wobei das Sprachantwortverfahren die folgenden Schritte im Sprachserver umfasst:
Empfangen der Sprachdaten und der ersten Sprachdatei vom Anwendungsserver und Erzeugen einer Grammatik auf der Grundlage der Sprachdaten;
Ausführen einer Spracherkennung der ersten Sprachdatei auf der Grundlage der Grammatik und Teilen der ersten Sprachdatei in eine Vielzahl von Sprachdateien; und
Ersetzen der zweiten Sprachdatei durch mindestens eine der geteilten Sprachdateien.

9. Programm zum Ausführen einer Sprachantwort in einem Sprachantwortsystem, das einen Anwendungsserver und einen Sprachserver beinhaltet, wobei der Anwendungsserver eine erste Sprachdatei, eine zweite Sprachdatei und Sprachdaten aufweist, wobei die Letzteren einen alternativen Text enthalten, wobei das Programm geeignet ist, den Sprachserver zu betreiben, um
die Sprachdaten und die erste Sprachdatei vom Anwendungsserver zu empfangen und eine Grammatik auf der Grundlage der Sprachdaten zu erzeugen;
eine Spracherkennung der ersten Sprachdatei auf der Grundlage der Grammatik auszuführen und die erste Sprachdatei in eine Vielzahl von Sprachdateien zu teilen; und
die zweite Sprachdatei durch mindestens eine der geteilten Sprachdateien zu ersetzen.

10. Sprachserver zum automatischen Ausführen einer Sprachverarbeitung, der Folgendes umfasst:
ein Mittel zum Empfangen einer ersten Sprachdatei, einer zweiten Sprachdatei und von Sprachdaten, wobei die Letzteren einen alternativen Text enthalten;
ein Mittel zum Erzeugen einer Grammatik auf der Grundlage der Sprachdaten;
ein Mittel zum Ausführen einer Spracherkennung der ersten Sprachdatei auf der Grundlage der Grammatik und zum Teilen der ersten Sprachdatei in eine Vielzahl von Sprachdateien; und
ein Mittel zum Ersetzen der zweiten Sprachdatei durch mindestens eine der geteilten Sprachdateien.

11. Sprachserver nach Anspruch 10, wobei die erste Sprachdatei ein ganzer Satz ist, der ein Variablensegment enthält, das einen Eintrag einer Variablen anzeigt und als eine Datei aufgezeichnet wird, und wobei die zweite Sprachdatei in das Variablensegment einzugebende Sprache ist, wobei die Sprache durch Sprachsynthese erzeugt wird.

12. Sprachserver nach Anspruch 10, wobei das Mittel zum Erzeugen der Grammatik die Grammatik durch Teilen des alternativen Textes in ein Variablensegment und vom Variablensegment verschiedene Segmente und durch Ersetzen eines festgelegten Wortes durch das Variablensegment erzeugt.

13. Sprachserver nach Anspruch 12, wobei das Mittel zum Erzeugen der Grammatik die Grammatik durch weiteres Teilen der durch Ersetzen des Wortes erzeugten Textdatei und durch Ändern des Teilungsergebnisses in eine spracherkennbare Form erzeugt.

14. Sprachdateiverarbeitungsverfahren zum automatischen Ausführen einer Sprachdateiverarbeitung mittels eines Sprachserver, wobei das Verfahren die folgenden Schritte im Sprachserver umfasst:
einen Schritt des Empfangens einer ersten Sprachdatei, einer zweiten Sprachdatei und von Sprachdaten, wobei die Letzteren einen alternativen Text enthalten;
einen Schritt des Erzeugens einer Grammatik auf der Grundlage der Sprachdaten;
einen Schritt des Ausführens einer Spracherkennung der ersten Sprachdatei auf der Grundlage der Grammatik und Teilen der ersten Sprachdatei in eine Vielzahl von Sprachdateien; und
einen Schritt des Ersetzens der zweiten Sprachdatei durch mindestens eine der geteilten Sprachdateien.

15. Programm zum automatischen Ausführen einer Sprachdateiverarbeitung mittels eines Sprachserver, wobei das Programm den Sprachserver betreibt, um
eine erste Sprachdatei, eine zweite Sprachdatei und Sprachdaten zu empfangen, wobei die Letzteren einen alternativen Text enthalten;
eine Grammatik auf der Grundlage der Sprachdaten zu erzeugen;
eine Spracherkennung der ersten Sprachdatei auf der Grundlage der Grammatik zu erzeugen und die erste Sprachdatei in eine Vielzahl von Sprachdateien zu teilen; und
die zweite Sprachdatei durch mindestens eine der geteilten Sprachdateien zu ersetzen.

16. Computerlesbares Aufzeichnungsmittel, auf dem das Programm nach Anspruch 9 oder Anspruch 15 gespeichert wird.

## Revendications

1. Système de réponse vocale comprenant un serveur d'application et un serveur vocal, le serveur d'application comportant un premier fichier vocal, un deuxième fichier vocal et des informations vocales, ces dernières comprenant un texte de choix, le serveur vocal comprenant :
un moyen de traitement de fichier vocal destiné à recevoir les informations vocales et le premier fichier vocal à partir du serveur d'application et destiné à générer une grammaire sur la base des informations vocales,
un moyen de reconnaissance vocale destiné à exécuter une reconnaissance vocale sur le premier fichier vocal sur la base de la grammaire et à diviser le premier fichier vocal en une pluralité de fichiers vocaux, et
un moyen de traitement vocal destiné à remplacer au moins l'un des fichiers vocaux divisés par le deuxième fichier vocal.

2. Système de réponse vocale selon la revendication 1, dans lequel le premier fichier vocal est l'ensemble d'une phrase qui comprend un segment de variable indiquant une entrée d'une variable et qui est enregistré sous la forme d'un fichier.

3. Système de réponse vocale selon la revendication 2, dans lequel le deuxième fichier vocal est une voix devant être entrée dans le segment de variable, la voix étant enregistrée sous la forme d'un fichier.

4. Système de réponse vocale selon la revendication 1, dans lequel les informations vocales comprennent un nom de fichier pour le premier fichier vocal et le moyen de traitement de fichier vocal extrait le premier fichier vocal sur la base du nom de fichier.

5. Système de réponse vocale selon la revendication 1, dans lequel les informations vocales comprennent un texte de choix et le moyen de traitement de fichier vocal génère la grammaire sur la base du texte de choix.

6. Système de réponse vocale selon la revendication 1, dans lequel les informations vocales comprennent des informations de variable indiquant s'il est nécessaire ou non d'exécuter un traitement sur une variable.

7. Système de réponse vocale selon la revendication 1, comprenant en outre un moyen de sortie vocale destiné à fournir en sortie une voix.

8. Procédé de réponse vocale destiné à un système de réponse vocale comprenant un serveur d'application et un serveur vocal, le serveur d'application comportant un premier fichier vocal, un deuxième fichier vocal et des informations vocales, ces dernières comprenant un texte de choix, le procédé de réponse vocale comprenant en tant qu'étapes dans le serveur vocal :
la réception des informations vocales et du premier fichier vocal à partir du serveur d'application et la génération d'une grammaire sur la base des informations vocales,
l'exécution d'une reconnaissance vocale sur le premier fichier vocal sur la base de la grammaire et la division du premier fichier vocal en une pluralité de fichiers vocaux, et
le remplacement d'au moins l'un des fichiers vocaux divisés par le deuxième fichier vocal.

9. Programme destiné à exécuter une réponse vocale dans un système de réponse vocale comprenant un serveur d'application et un serveur vocal, le serveur d'application comportant un premier fichier vocal, un deuxième fichier vocal et des informations vocales, ces dernières comprenant un texte de choix, le programme étant conçu pour amener le serveur vocal à fonctionner :
pour recevoir les informations vocales et le premier fichier vocal à partir du serveur d'application et générer une grammaire sur la base des informations vocales,
pour exécuter une reconnaissance vocale sur le premier fichier vocal sur la base de la grammaire et diviser le premier fichier vocal en une pluralité de fichiers vocaux, et
pour remplacer au moins l'un des fichiers vocaux divisés par le deuxième fichier vocal.

10. Serveur vocal destiné à exécuter automatiquement un traitement vocal, comprenant :
un moyen destiné à recevoir un premier fichier vocal, un deuxième fichier vocal et des informations vocales, ces dernières comprenant un texte de choix,
un moyen destiné à générer une grammaire sur la base des informations vocales,
un moyen destiné à exécuter une reconnaissance vocale sur le premier fichier vocal sur la base de la grammaire et à diviser le premier fichier vocal en une pluralité de fichiers vocaux, et
un moyen destiné à remplacer au moins l'un des fichiers vocaux divisés par le deuxième fichier vocal.

11. Serveur vocal selon la revendication 10, dans lequel le premier fichier vocal est l'ensemble d'une phrase qui comprend un segment de variable indiquant une entrée d'une variable et qui est enregistré sous la forme d'un fichier et dans lequel le deuxième fichier vocal est une voix devant être entrée dans le segment de variable, la voix étant générée par synthèse vocale.

12. Serveur vocal selon la revendication 10, dans lequel le moyen destiné à générer la grammaire génère la grammaire en divisant le texte de choix en un segment de variable et en segments autres que le segment de variable et en remplaçant le segment de variable par un mot prédéterminé.

13. Serveur vocal selon la revendication 12, dans lequel le moyen destiné à générer la grammaire génère la grammaire en divisant en outre le fichier de texte généré par le remplacement par un mot et en modifiant le résultat de division en une forme reconnaissable vocale.

14. Procédé de traitement de fichier vocal destiné à exécuter automatiquement un traitement de fichier vocal au moyen d'un serveur vocal, le procédé comprenant en tant qu'étapes dans le serveur vocal :
une étape de réception d'un premier fichier vocal, d'un deuxième fichier vocal et d'informations vocales, ces dernières comprenant un texte de choix,
une étape de génération d'une grammaire sur la base des informations vocales,
une étape d'exécution d'une reconnaissance vocale sur le premier fichier vocal sur la base de la grammaire et de division du premier fichier vocal en une pluralité de fichiers vocaux, et
une étape de remplacement d'au moins l'un des fichiers vocaux divisés par le deuxième fichier vocal.

15. Programme destiné à exécuter automatiquement un traitement de fichier vocal au moyen d'un serveur vocal, le programme amenant le serveur vocal à fonctionner :
pour recevoir un premier fichier vocal, un deuxième fichier vocal et des informations vocales, ces dernières comprenant un texte de choix,
pour générer une grammaire sur la base des informations vocales,
pour exécuter une reconnaissance vocale sur le premier fichier vocal sur la base de la grammaire et diviser le premier fichier vocal en une pluralité de fichiers vocaux, et
pour remplacer au moins l'un des fichiers vocaux divisés par le deuxième fichier vocal.

16. Support d'enregistrement lisible par un ordinateur sur lequel le programme conforme à la revendication 9 ou à la revendication 15 est mémorisé.
